(19) Europäisches Patentamt
European Patent Office
Office européen des brevets

(11) **EP 1 612 962 B1**

(12) **EUROPEAN PATENT SPECIFICATION**

(45) Date of publication and mention
of the grant of the patent:
**28.09.2011 Bulletin 2011/39**

(51) Int Cl.:
*H04B 3/23* *(2006.01)*    *H04L 27/00* *(2006.01)*

(21) Application number: **04015203.5**

(22) Date of filing: **29.06.2004**

(54) **Broadband xDSL transceiver**

Breitbandiger xSDL-Transceiver

Emetteur-Récepteur xDSL à large bande

(84) Designated Contracting States:
**DE FR GB IT**

(43) Date of publication of application:
**04.01.2006 Bulletin 2006/01**

(73) Proprietor: **Lantiq Deutschland GmbH**
**85579 Neubiberg (DE)**

(72) Inventors:
• **Barkarö, Stefan**
**18460 Akersberga (SE)**
• **Bokinge, Bo**
**16839 Bromma (SE)**
• **Karlsson, Lars**
**19434 Upplands Väsby (SE)**
• **Johansson, Carl-Mikael**
**11235 Stockholm (SE)**
• **Randahl, Torbjörn**
**13142 Nacka (SE)**

(74) Representative: **Reinhard - Skuhra - Weise &**
**Partner GbR**
**Patent- und Rechtsanwälte**
**Postfach 44 01 51**
**80750 München (DE)**

(56) References cited:
**EP-A- 1 128 570    EP-A- 1 326 390**
**WO-A-03/032515**

**Description**

The invention refers to a broadband xDSL transceiver having a constant transmission gain over a broad frequency range.

The usual subscriber line technology (DSL) offers fast data transfer on existing copper based telephone lines. In DSL broadband data signals are transmitted on significantly higher frequencies than traditional narrow band telephone signals. Since the narrow band telephone signals and the broadband data signals are both transmitted over the same subscriber line, splitter devices are provided for splitting and recombining the two types of signals at both ends of the subscriber line, i.e. at the central office or switching center, and at the end terminals of the subscriber location. There are various types of DSLs that have envolved over the last years such as ADSL, HDSL, SDSL and VDSL.

Multitone modulation is the basis of the DMT version of ADSL as well as some multi-carrier versions of VDSL. This type of modulation is also called orthogonal frequency division multiplexing (OFDM).

In order to transmit the xDSL data signals over the telephone line which normally consists of a pair of copper wires, the central office is provided with line drivers. The line driver compensates for the attenuation of the telephone line has to comply with the PSD mask requirement of the respective DSL standard. The line driver amplifiers the line coded xDSL signal so that it is received downstream at the subscriber location with sufficient signal intensity.

In xDSL applications signals are transmitted and received simultaneously. The transmission signal is amplified by the line driver and the reception signal is received and evaluated by a receiver. The line driver output and the receiver input are both connected to the signal line. At the receiver input there are applied the transmission signal amplified by the line driver and the reception signal received from a distant transceiver via the signal line. The transmission signal at the receiver input of the transceiver has a much higher amplitude than the reception signal which is damped by the impedance of the signal line. To avoid that the transmission signal and signal distortion is coupled into the receiver a conventional broadband DSL transceiver comprises an echo canceling bridge to suppress the transmission signal at the signal input of the receiver. By minimizing the amplitude of the transmission signal applied to the input of the receiver the signal to noise ratio (SNR) of the reception signal is increased so that the achievable data bit rate of the xDSL transceiver is increased. An example of prior art can be found in the application WO 03/032515.

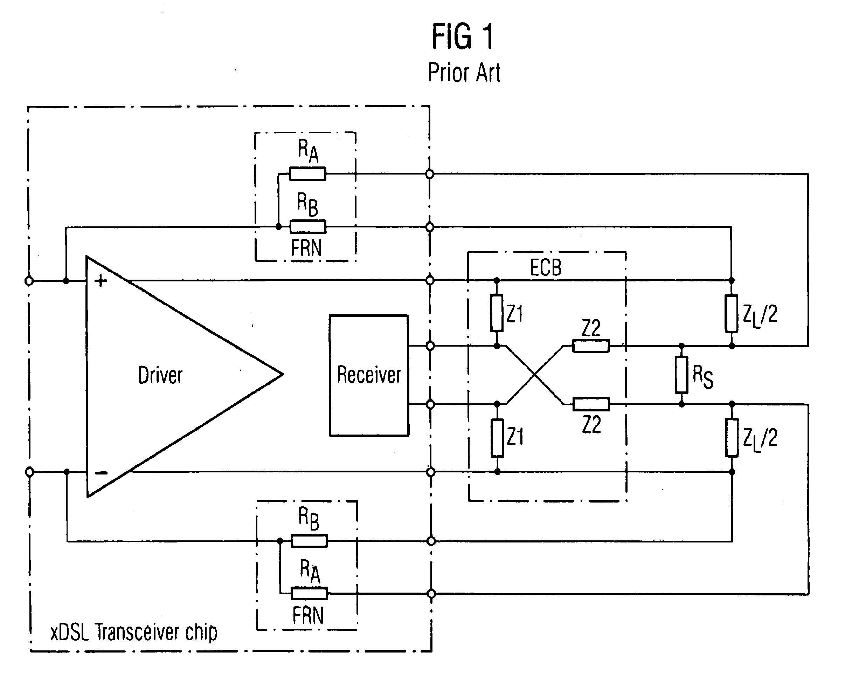

Figure 1 shows a xDSL transceiver for transmitting and receiving a xDSL signal according to the state of the art. The xDSL transceiver comprises a line driver for driving a transmission signal applied to a signal input of the analog line driver via a signal line which is formed e.g. by a pair of copper wires. The output of the line driver is connected via a transformer (not shown) to the transmission line. The transmission line comprises a complex line impedance $Z_L$.

The xDSL transceiver according to the state of the art as shown in figure 1 further comprises a receiver for evaluating a reception signal received via the signal line and applied to a signal input of that receiver. As shown in figure 1 a sense resistor $R_S$ is connected to the output terminal of the xDSL transceiver for sensing the output current of the line driver.

A feedback resistor network (FRN) is provided between the output terminal of the xDSL transceiver and the signal input of the analog line driver. The feedback resistor network FRN is provided for forming a synthesized termination output impedance $Z_T$ of the xDSL transceiver as a product of the sense resistor $R_S$ and a synthesis factor. The feedback resistor network FRN of the xDSL transceiver according to the state of the art is formed by at least two resistors $R_A$, $R_B$. The resistors of the feedback resistor networks are set so that the termination impedance $Z_T$ of the xDSL transceiver matches the load impedance $Z_L$ of the transmission line. The xDSL transceiver according to the state of the art comprises an active termination impedance formed by the sense resistor $R_S$ and the feedback resistor network FRN. The feedback resistor network FRN is normally integrated with the line driver and the receiver on a xDSL transceiver chip.

The xDSL transceiver according to the state of the art as shown in figure 1 comprises an echo canceling bridge (ECB) which is provided for minimizing the transmission signal generated by the line driver at the signal input of the receiver. The echo canceling bridge ECB is formed fully differential and comprises two pairs of complex impedances Z1, Z2. Since the impedances Z1, Z2 of the echo canceling bridge ECB are not purely resistive but complex it is difficult to integrate these components on the xDSL transceiver chip. Accordingly the echo canceling bridge ECB of the xDSL transceiver according to the state of the art as shown in figure 1 is not integrated in the xDSL transceiver chip.

Consequently a first disadvantage of the xDSL transceiver according to the state of the art as shown in figure 1 is that the echo canceling bridge ECR is not integrated on the transceiver chip thus increasing the size of the xDSL transceiver line card and the production costs. Further it is more likely that the echo canceling bridge ECB which is provided outside the xDSL transceiver chip picks up noise from the surrounding e.g. the noise sensitivity of the receiver is increased.

An even more severe drawback of the conventional xDSL transceiver as shown in figure 1 is that because of the resistive sense resistor $R_S$ the matching between the synthesized termination impedance $Z_T$ of the xDSL transceiver and the load impedance $Z_L$ of the transmission line is far from perfect so that the transmission gain is not a flat curve over the broadband frequency range i.e. the transmission gain is not constant.

Accordingly it is the main object of the invention to provide a xDSL transceiver having a synthesized termination output impedance $Z_T$ which matches the load impedance $Z_L$ of the transmission line over a broad frequency range.

This object is achieved by a broadband xDSL transceiver having the features of main claim 1.

The invention provides a broadband xDSL transceiver for transmitting and receiving signals in a broadband frequency range via a signal line which has a complex line impedance $Z_L$,

wherein the xDSL transceiver comprises

a line driver for driving a transmission signal applied to a signal input of said line driver via said signal line,
a receiver for evaluating a reception signal received via said signal line and applied to a signal input of said receiver,
an echo canceling bridge for canceling the transmission signal at the signal input of said receiver,
a sense impedance ($Z_S$) connected to the signal line,
a feedback resistor network provided between the sense impedance ($Z_S$) and the signal input of said line driver for forming a synthesized termination impedance ($Z_T$) of the xDSL transceiver as a product of the sense impedance ($Z_S$) and an impedance synthesis factor (G),
wherein the sense impedance ($Z_S$) is a complex impedance so that the synthesized termination impedance ($Z_T$) matches the line impedance ($Z_L$) over all frequencies in the predetermined broadband frequency range.

In a preferred embodiment the feedback resistor network is programmable to adjust the impedance synthesis factor (G).

This has the advantage that the synthesized termination impedance ($Z_T$) of the xDSL transceiver is adaptable to different transmission lines having different load impedances ($Z_L$).

In a further preferred embodiment of the xDSL transceiver according to the present invention the echo canceling bridge is programmable to minimize the transmission signal at the signal input of the receiver.

In a preferred embodiment the line driver, the receiver, the feedback resistor network and the echo canceling bridge are integrated on a xDSL transceiver chip.

The integration of the echo canceling bridge on the xDSL transceiver chip has the advantage that the size of the xDSL transceiver line card is decreased.

A further advantage is that the production costs for a broadband xDSL transceiver are decreased.

A further advantage of integrating the echo canceling bridge within the xDSL transceiver chip is that the noise sensitivity of the receiver is diminished, i.e. it is less likely that the receiver picks up crosstalk from the surrounding.

In a preferred embodiment the xDSL transceiver is formed fully differential.

In a further embodiment the line driver comprises a signal output which is connected via a transformer to the signal line.

In a preferred embodiment the echo canceling bridge is formed by a resistor network comprising resistors which are integrated on the xDSL transceiver chip.

In the following preferred embodiments of the programmable xDSL transceiver according to the present invention are described with reference to the enclosed figures.

Figure 1    shows an xDSL transceiver according to the state of the art;

Figure 2    shows a first embodiment of the broadband xDSL transceiver according to the present invention;

Figure 3    shows a second embodiment of the broadband xDSL transceiver according to the present invention.

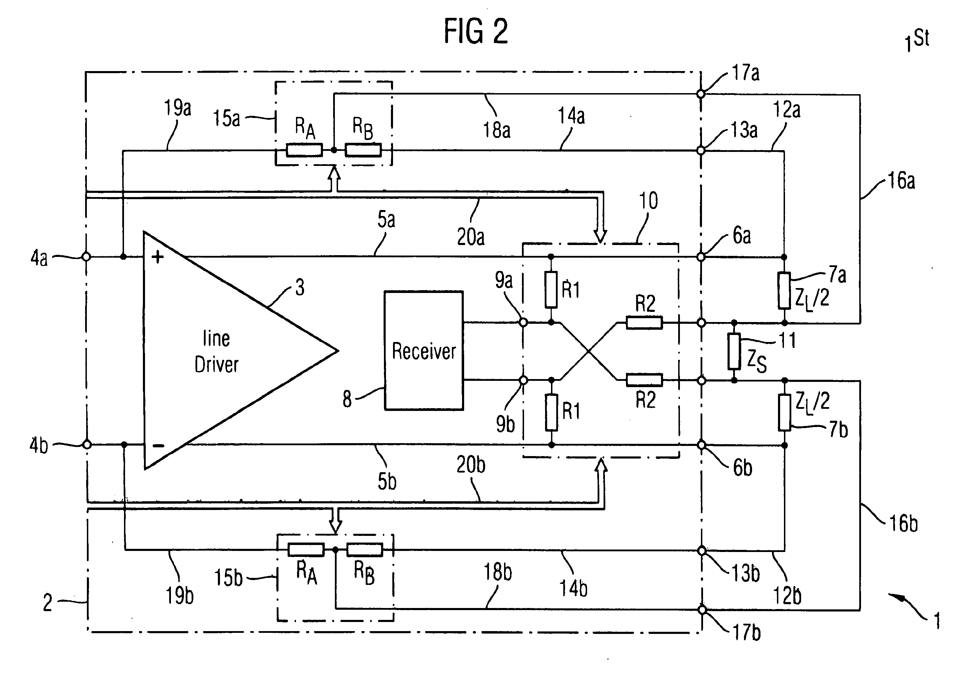

As can be seen from figure 2 the broadband xDSL transceiver 1according to the present invention comprises a xDSL transceiver chip 2 including a line driver 3 for driving a transmission signal applied to a signal input 4a, 4b of the line driver 3. The line driver 3 amplifies the applied analog signal and outputs the amplified signal via internal signal lines 5a, 5b to output terminals 6a, 6b of the xDSL transceiver chip 2. The output terminal 6a, 6b of the xDSL transceiver chip 2 are connected via a transformer not shown to the transmission line having a load impedance $Z_L$. The impedance $Z_L$ of the transmission line is complex. The transmission line is shown as impedances 7a, 7b in figure 2.

The xDSL transceiver 1 further comprises a receiver 8 for evaluating a reception signal received via the signal line and applied to a signal input 9a, 9b of the receiver 8. The xDSL transceiver 1 further comprises an echo canceling bridge 10 for canceling the transmission signal at the signal input 9a, 9b of the receiver 8. A sense impedance 11 is connected to the signal line. The sense impedance 11 of the xDSL transceiver 1 according to the present invention is like the impedance $Z_L$ of the transmission line also complex. The sense impedance 11 having the complex impedance $Z_S$ is in the embodiment shown in figure 2 not integrated in the xDSL transceiver chip 2.

The signal terminals 6a, 6b of the xDSL transceiver chip 2 are fedback via first feedback lines 12a, 12b to terminals 13a, 13b of the xDSL transceiver chip 2. The terminals 13a, 13b are connected via internal lines 14a, 14b to feedback resistor networks 15a, 15b. The sense impedance 11 of the xDSL transceiver 1 is connected via second external feedback lines 16a, 16b to terminals 17a, 17b of the xDSL transceiver chip 2. Theses terminals 17a, 17b are also connected via internal lines 18a, 18b to the feedback resistor networks 15a, 15b. The feedback resistor networks 15a, 15b each comprise at least two resistors $R_A$, $R_B$. Further the feedback resistor networks 15a, 15b include switches (not shown) so that the feedback resistance is programmable. The feedback resistor networks 15a, 15b are connected via internal feedback lines 19a, 19b to the line driver input 4a, 4b.

The echo canceling bridge 10 comprises two pairs of resistors $R_1$, $R_2$. The resistors $R_1$, $R_2$ do not have a complex impedance and are purely resistive so that they can be integrated easily on the xDSL transceiver chip 2. A first resistor $R_1$ is provided between the internal signal lines 5a, 5b and the signal input 9a, 9b of the receiver 8. The second resistor $R_2$ is connected between the complex sense impedance 11 and the signal input 9a, 9b of the receiver 8.

In a preferred embodiment the echo canceling bridge 10 is also programmable by means of internal programming control lines 20a, 20b so that the transmission signal generated by the line driver 3 at the signal input 9a, 9b of the receiver 8 is minimized. The programmable echo canceling bridge 10 comprises switches (not shown) which are controlled by means of the control lines 20a, 20b. The programming control lines 20a, 20b are connected to a microprocessor provided within the xDSL transceiver 1.

The feedback resistor networks 15a, 15b which are provided between the sense impedance 11 and the signal input 4a, 4b of the line driver 3 form a synthesized termination impedance $Z_T$ of the xDSL transceiver 1.

The termination impedance $Z_T$ of the xDSL transceiver 1 is the product of the sense impedance $Z_S$ and an adjustable impedance synthesis factor (G):

$$Z_T = G \cdot Z_S \qquad (1)$$

Optimal matching is achieved when the termination impedance $Z_T$ is identical to the load impedance $Z_L$ of the signal line:

$$Z_T = Z_L \qquad (2)$$

Consequently:

$$Z_L = G \cdot Z_S \qquad (3)$$

The transmission gain of the transmit signal generated by the line driver 3 at the receiver input 9a, 9b is given by:

$$G_{TX} = 1 - \left[ \frac{2}{1 + \frac{R_2}{R_1}} \right] \cdot \left[ 1 - \frac{1}{2\left(1 + \frac{Z_S}{Z_L}\right)} \right] \qquad (4)$$

When the load impedance $Z_L$ is known it can be achieved that the transmission gain $G_{TX}$ becomes zero by correctly dimensioning the resistances $R_1$, $R_2$ of the resistors within the echo canceling bridge 10 and the complex impedance $Z_S$ of impedance 11.

Accordingly the echo canceling bridge 10 can be implemented in such a manner that the transmission signal is cancelled almost completely at the signal input of the receiver 8 thereby achieving a minimized crosstalk.

The gain of the reception signal $G_{RX}$ given by:

$$G_{RX} = \frac{1}{G}\left[G + \frac{1-G}{1+\dfrac{R_2}{R_1}}\right] \qquad (5)$$

The resistors $R_1$, $R_2$ of the echo canceling bridge are dimensioned in such a way that the gain G is minimized. The synthesis factor G is chosen to be sufficiently high to have an acceptable reception signal gain $G_{RX}$ but still low enough to achieve a low power dissipation.

When decreasing the impedance $Z_S$ thus minimizing power dissipation this has as a trade off that the gain of the reception signal $G_{RX}$ is decreased.

As can be seen from equation (4) since the sense resistor has also a complex impedance $Z_S$ like the impedance of the signal line the quotient $\dfrac{Z_S}{Z_L}$ is a constant so that $G_{TX}$ is zero for a wide frequency range. Accordingly a flat transmission gain function of the transmission signal can be achieved for all frequencies in the predetermined broadband frequency range of the xDSL transceiver 1.

Since the impedance 11 is complex ($Z_S$) it is possible in the xDSL transceiver 1 to use an echo canceling bridge 10 which is pure resistive i.e. which comprises only resistors which do not have a complex impedance. Consequently the echo canceling bridge 10 of the xDSL transceiver 1 according to the present invention can be easily integrated of the xDSL transceiver chip 2. Accordingly the xDSL transceiver 1 achieves a superior matching and minimized crosstalk at the same time. Further the xDSL transceiver 1 according to the present invention is smaller in size and can be produced with lower costs.

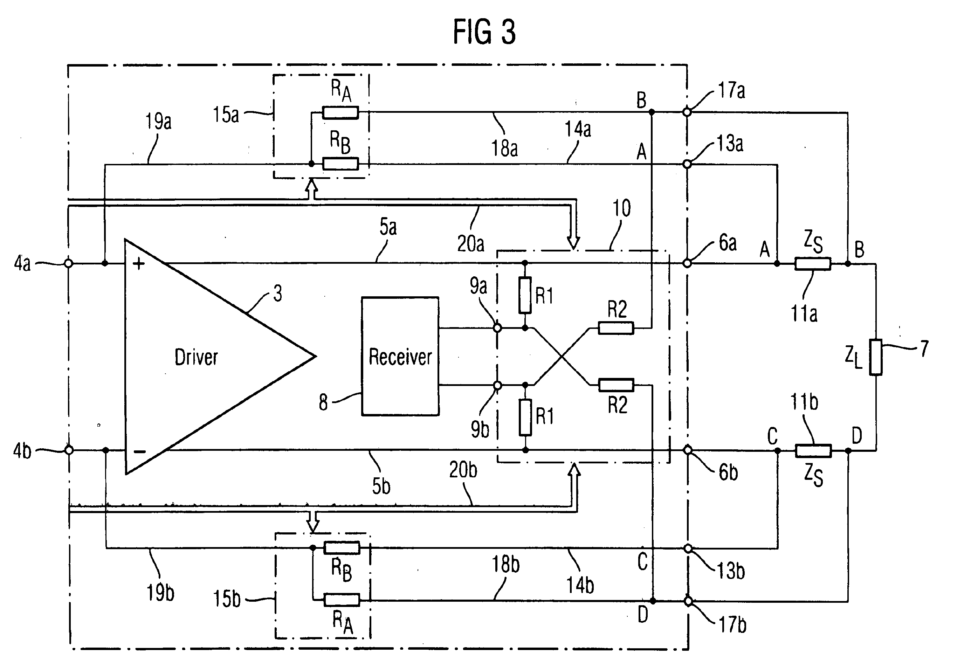

Figure 3 shows an alternative embodiment of the xDSL transceiver 1 according to the present invention.

In this embodiment the sense impedance $Z_S$ is connected in series to the load impedance $Z_L$, i.e. with or without using of a transformer. The second resistor $R_1$ of the echo canceling bridge 10 is provided between the signal input 9a, 9b of the receiver 8 and terminals 17a, 17b in the feedback loop.

In typical applications the load impedance $Z_L$ of the signal line is about 100 ohm. To minimize the impedance of the sensing resistor 11 and to minimize the power dissipation feedback loops are employed to form a synthesized termination impedance $Z_T$ which matches the load impedance $Z_L$ of the signal line, i.e. the termination impedance is typically also around 100 ohm. In a typical embodiment of the xDSL transceiver 1 according to the present invention the impedance synthesis factor G is about 7.

## Claims

1. Broadband xDSL transceiver for transmitting and receiving signals in a predetermined broadband frequency range (F) via a signal line which has a complex line impedance (ZL), wherein the xDSL transceiver (1) comprises:

   (a) a line driver (3) for driving a transmission signal applied to a signal input (4a, 4b) of said line driver (3) via said signal line;
   (b) a receiver (8) for evaluating a reception signal received via said signal line and applied to a signal input of said receiver (8);
   (c) an echo canceling bridge (10) for canceling the transmission signal at the signal input (9a, 9b) of said receiver (8) ;
   (d) a sense impedance (11) connected to the signal line;
   (e) a feedback resistor network (15a, 15b) provided between the sense impedance (11) and the signal input (4a, 4b) of said line driver (3) for forming a synthesized termination impedance (ZT) of the xDSL transceiver (1) as a product of the sense impedance and an impedance synthesis factor (G);
   (f) wherein the sense impedance (11) is a complex impedance (ZS) so that the synthesized termination impedance (ZT) matches the line impedance (ZL) over the predetermined broadband frequency range F), **characterized in that** the echo canceling bridge includes at least one switchably connectable resistor.

2. The broadband xDSL transceiver according to claim 1 wherein the feedback resistor network (15a, 15b) is programmable to adjust the impedance synthesis factor (G).

3. The broadband xDSL transceiver according to claim 1 wherein the echo canceling bridge (10) is programmable to minimize the transmission signal at the signal input (9a, 9b) of the receiver (8).

4. The broadband xDSL transceiver according to claim 1 wherein the line driver (3), the receiver (8), the feedback resistor network (15a, 15b) and the echo canceling bridge (10) are integrated on a xDSL transceiver chip (2).

5. The broadband xDSL transceiver according to claim 1 wherein the xDSL transceiver (1) is formed fully differential.

6. The broadband xDSL transceiver according to claim 1 wherein the line driver (3) comprises a signal output which is connected via a transformer to the signal line.

7. The broadband xDSL transceiver according to claim 6 wherein the echo canceling bridge (10) is formed by a resistor network comprising resistors (R1, R2) which are integrated on said xDSL transceiver chip (2).

**Patentansprüche**

1. Breitband-xDSL-Sendeempfänger zum Senden und Empfangen von Signalen in einem Vorbestimmten Breitband-Frequenzbereich (F) über eine Signalleitung, die eine komplexe Leitungsimpedanz (ZL) aufweist, wobei der xDSL-Sendeempfänger (1) aufweist:

(a) einen Leitungstreiber (3) zum Treiben eines an einen Signaleingang (4a, 4b) des Leitungstreibers (3) angelegten Übertragungssignals über die Signalleitung;
(b) einen Empfänger (8) zum Auswerten eines Empfangssignals, das über die Signalleitung empfangen und an einen Signaleingang des Empfängers (8) angelegt wurde;
(c) eine Echokompensierungsbrücke (10) zum Löschen des Übertragungssignals an dem Signaleingang (9a, 9b) des Empfängers (8);
(d) eine Abtastimpedanz (11), die mit der Signalleitung verbunden ist;
(e) ein Rückkopplungswiderstandsnetzwerk (15a, 15b), das zwischen der Abtastimpedanz (11) und dem Signaleingang (4a, 4b) des Leitungstreibers (3) vorgesehen ist, um eine synthetisierte Abschlussimpedanz (ZT) des xDSL-Sendeempfängers (1) als ein Produkt der Abtastimpedanz und eines Impedanzsynthesefaktors (G) zu bilden;
(f) wobei die Abtastimpedanz (11) eine komplexe Impedanz (ZS) ist, so dass die synthetisierte Abschlussimpedanz (ZT) über den Vorbestimmten Breitband-Frequenzbereich (F) zu der Leitungsimpedanz (ZL) passt,

**dadurch gekennzeichnet, dass** die Echokompensierungsbrücke mindestens einen schaltbar anschließbaren Widerstand umfasst.

2. Breitband-xDSL-Sendeempfänger nach Anspruch 1, wobei das Rückkopplungswiderstandsnetzwerk (15a, 15b) programmierbar ist, um den Impedanzsynthesefaktor (G) einzustellen.

3. Breitband-xDSL-Sendeempfänger nach Anspruch 1, wobei die Echokompensierungsbrücke (10) programmierbar ist, um das Übertragungssignal an dem Signaleingang (9a, 9b) des Empfängers (8) zu minimieren.

4. Breitband-xDSL-Sendeempfänger nach Anspruch 1, wobei der Leitungstreiber (3), der Empfänger (8), das Rückkopplungswiderstandsnetzwerk (15a, 15b) und die Echokompensierungsbrücke (10) auf einem xDSL-Sendeempfängerchip (2) integriert sind.

5. Breitband-xDSL-Sendeempfänger nach Anspruch 1, wobei der xDSL-Sendeempfänger (1) vollkommen differentiell ausgebildet ist.

6. Breitband-xDSL-Sendeempfänger nach Anspruch 1, wobei der Leitungstreiber (3) einen Signalausgang aufweist, der über einen Transformator mit der Signalleitung verbunden ist.

7. Breitband-xDSL-Sendeempfänger nach Anspruch 6, wobei die Echokompensierungsbrücke (10) durch ein Widerstandsnetzwerk gebildet ist, das Widerstände (R1, R2) aufweist, die auf dem xDSL-Sendeempfängerchip (2) integriert sind.

**Revendications**

1. Emetteur-récepteur xDSL à large bande destiné à transmettre et à recevoir des signaux dans une plage de fréquence à large bande prédéterminée (F) par l'intermédiaire d'un circuit de signaux ayant une impédance de circuit complexe (ZL), dans lequel l'émetteur-récepteur xDSL à large bande (1) comprend :

   (a) un circuit de commande de ligne (3) destiné à commander un signal de transmission appliqué à une entrée de signaux (4a, 4b) dudit circuit de commande de ligne (3) par l'intermédiaire dudit circuit de signaux;
   (b) un récepteur (8) destiné à évaluer un signal de réception reçu par l'intermédiaire dudit circuit de signaux et appliqué à une entrée de signaux dudit récepteur (8) ;
   (c) un pont d'annulation d'écho (10) destiné à annuler le signal de transmission au niveau de l'entrée de signaux (9a, 9b) dudit récepteur (8) ;
   (d) une impédance de détection (11) reliée au circuit de signaux;
   (e) un réseau de résistance de rétroaction (15a, 15b) fourni entre l'impédance de détection (11) et l'entrée de signaux (4a, 4b) dudit circuit de commande de ligne (3) pour former une impédance de terminaison synthétisée (ZT) de l'émetteur-récepteur xDSL (1) comme un produit de l'impédance de détection et un facteur de synthèse d'impédance (G) ;
   (f) dans lequel l'impédance de détection (11) est une impédance complexe (ZS) de telle sorte que l'impédance de terminaison synthétisée (ZT) correspond à l'impédance de circuit (ZL) sur la une plage de fréquence à large bande prédéterminée (F),

   **caractérisé par le fait que** le pont d'annulation d'écho comprend au moins une résistance pouvant être connectée par commutation.

2. Emetteur-récepteur xDSL à large bande selon la revendication 1 dans lequel le réseau de résistance de rétroaction (15a, 15b) est programmable pour régler le facteur de synthèse d'impédance (G).

3. Emetteur-récepteur xDSL à large bande selon la revendication 1 dans lequel le pont d'annulation d'écho (10) est programmable pour réduire le signal de transmission au niveau de l'entrée de signaux (9a, 9b) du récepteur (8).

4. Emetteur-récepteur xDSL à large bande selon la revendication 1 dans lequel le circuit de commande de ligne (3), le récepteur (8), le réseau de résistance de rétroaction (15a, 15b) et le pont d'annulation d'écho (10) sont intégrés sur une puce de l'émetteur-récepteur xDSL (2).

5. Emetteur-récepteur xDSL à large bande selon la revendication 1 dans lequel l'émetteur-récepteur xDSL (1) est formé de manière entièrement différentielle.

6. Emetteur-récepteur xDSL à large bande selon la revendication 1 dans lequel le circuit de commande de ligne (3) comprend une sortie de signaux qui est reliée par l'intermédiaire d'un transformateur au circuit de signaux.

7. Emetteur-récepteur xDSL à large bande selon la revendication 1 dans lequel le pont d'annulation d'écho (10) est formé par un réseau de résistance (R1, R2) qui est intégré sur ladite puce de l'émetteur-récepteur xDSL (2).

## FIG 1
Prior Art

FIG 2

# FIG 3

EP 1 612 962 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03032515 A